# EUROPÄISCHE PATENTANMELDUNG

(11) **EP 1 291 994 A2**
(43) Veröffentlichungstag der Anmeldung: **12.03.2003**
(21) Anmeldenummer: 02018899.1
(22) Anmeldetag: 23.08.2002
(51) Int. Cl.: H02G 3/08

(54) **Dichtvorrichtung für ein Installationsgerät, sowie Anordnung mit einer Dichtvorrichtung, einem Installationsgerät und einer Unterputzdose**

(30) Priorität: 05.09.2001 DE 10143494
(71) Anmelder: SIEMENS AKTIENGESELLSCHAFT, 80333 München (DE)
(72) Erfinder: Huttner, Roland, 93133 Burglengenfeld (DE); Krampfl, Christian, 94339 Leiblfing (DE)

(57) **Zusammenfassung**

Um bei einem Unterputz-Installationsgerät, z.B. einer Steckdose, einen verbesserten Spritzwasserschutz gegenüber von einer Wand herunterlaufenden Wassers zu erzielen, ist vorgesehen, dass zwischen Hängebügel und Unterputzdose eine Dichtvorrichtung angeordnet ist. Die Dichtvorrichtung weist einerseits an ihrem förmigen Rundkörper eine Dichtlippe zur Abdichtung gegenüber der Unterputzdose auf. Andererseits ist hängebügelseitig ein Flansch mit Vorsprung vorgesehen, der eine Abdichtung gegenüber der Frontseite des Installationsgerätes bietet. Somit wird hinter den Einbaurahmen des Installationsgerätes fließendes Spritzwasser um das Installationsgerät herumgeleitet.

## Beschreibung

In der elektrischen Energieversorgung für Haushalte werden sogenannte Unterputzgeräte, z.B. Schalter und Steckdosen, verwendet. Um diese entsprechend den geltenden Sicherheitsbestimmungen, z.B. VDE-Bestimmungen, gegen Spritzwasser zu schützen, ist es aus der Praxis bekannt, durch Dichtmittel den Hängebügel 2 oder die Abdeckung des Installationsgerätes gegenüber seinen in der Unterputzdose angeordneten Teilen abzudichten. Dies erfolgt im einfachsten Falle durch eine Ringdichtung. Dies gilt insbesondere bei der Spritzwasserprüfung für die "abgesetzte Steinwand".

Diese Abdichtung hat zum Nachteil, dass Spritzwasser von der Wand auf die Abdeckung, und somit ggf. von vorne in das Installationsgerät, z.B. in eine Steckdose, geleitet werden kann.

Der Erfindung liegt die Aufgabe zugrunde, eine einfache Dichtvorrichtung und Anordnung anzugeben, bei der ein verbesserter Spritzwasserschutz für Einbauinstallationsgeräte gegeben ist.

Die Lösung der Aufgabe gelingt erfindungsgemäß mit einer Dichtvorrichtung gemäß Anspruch 1. Da der Rahmen 3 nicht gegenüber der Wand abgedichtet ist, fließt zunächst Spritzwasser von der Wand hinter den Rahmen und somit auch hinter den Hängebügel des Installationsgerätes. Es wird hier also ― entgegen dem bekannten Stand der Technik ― ein Eindringen von Wasser hinter den Rahmen oder die Abdeckung des Installationsgeräts erlaubt. Dort tritt nun die Wirkung der neuen Dichtvorrichtung in Aktion. Einerseits erlaubt sie durch ihre zurückversetze Dichtlippe kein Eindringen von Wasser in die Unterputzdose. Andererseits wird durch den Vorsprung 1c der Hängebügel 2 und der vor der Wand stehende Rahmen 3 abgedichtet, so dass Spritzwasser gezielt in einen Kanal zwischen Dichtlippe 1b und Flanschplatte 1a gelenkt wird. Gegenüber dem Stand der Technik findet also statt einer Abdichtung ein gezieltes Umlenken oder Leiten des Wasserstromes statt, so dass das Spritzwassers nicht über die Gerätefrontseite fließt und dort einen Kurzschluss erzeugen kann. Demnach ist vorgesehen:

Eine Dichtvorrichtung für ein Installationsgerät, welches in einer Unterputzdose anordbar ist, mit
einem rohrförmigen Grundkörper, welcher eine Flanschplatte aufweist und das Installationsgerät umfassend in der Unterputzdose anordbar ist,
wobei der Grundkörper zumindest teilweise an seinem Umfang eine zur Abdichtung gegenüber der Unterputzdose dienende Dichtlippe aufweist,
wobei die Dichtlippe und der Flansch voneinander beabstandet sind, und
wobei die Flanschplatte randseitig zumindest teilweise auf ihrer der Dichtlippe abgewandten Seite einen dichtenden Vorsprung zur randseitigen Anlage an den Hängebügel des Installationsgerätes aufweist.

Mit Vorteil ist der Vorsprung von einer Abwinklung der Flanschplatte gebildet. Damit ist eine platz- und materialsparende Ausführung gegeben.

Bevorzugt weist die Dichtlippe ein Lippenpaar auf, wodurch eine gute Dichtwirkung gegenüber der Unterputzdose gegeben ist.

Die Dichtlippe umfasst dabei etwa den halben Umfang des rohrförmigen Grundkörpers umfasst, wobei als Werkstoff ein flexibler Kunststoff dient.

Die Flanschplatte und Dichtlippe sollten zumindest etwa 0,5 cm voneinander beabstandet sein. Damit ergibt sich ein günstiger Raumeffekt.

Eine weitere Lösung der Aufgabe gelingt mit den Merkmalen des Anspruchs 7. Die oben genannten Vorteile gelten hier sinngemäß.

Demnach ist gegeben: Eine Anordnung mit einer Dichtvorrichtung, einer Unterputzdose und einem darin anordbaren Installationsgerät, wobei die Dichtvorrichtung umfasst:
- einen rohrförmigen Grundkörper, welcher eine Flanschplatte aufweist und das Installationsgerät umfassend in der Unterputzdose anordbar ist,
wobei der Grundkörper zumindest teilweise an seinem Umfang eine zur Abdichtung gegenüber der Unterputzdose dienende Dichtlippe aufweist,
wobei die Dichtlippe und der Flansch voneinander beabstandet sind, und
wobei die Flanschplatte randseitig zumindest teilweise auf ihrer der Dichtlippe abgewandten Seite einen dichtenden Vorsprung zur randseitigen Anlage an den Hängebügel und/oder den Rahmen des Installationsgerätes aufweist.

Weitere Vorteile und Details der Erfindung werden nachfolgend anhand der Zeichnung näher erläutert. Dabei zeigen:
- FIG 1: zeigt eine Anordnung in einem Teillängsschnitt,
- FIG 2: zeigt die Anordnung in einer Explosionsdarstellung und
- FIG 3: zeigt eine Dichtvorrichtung der Anordnung.

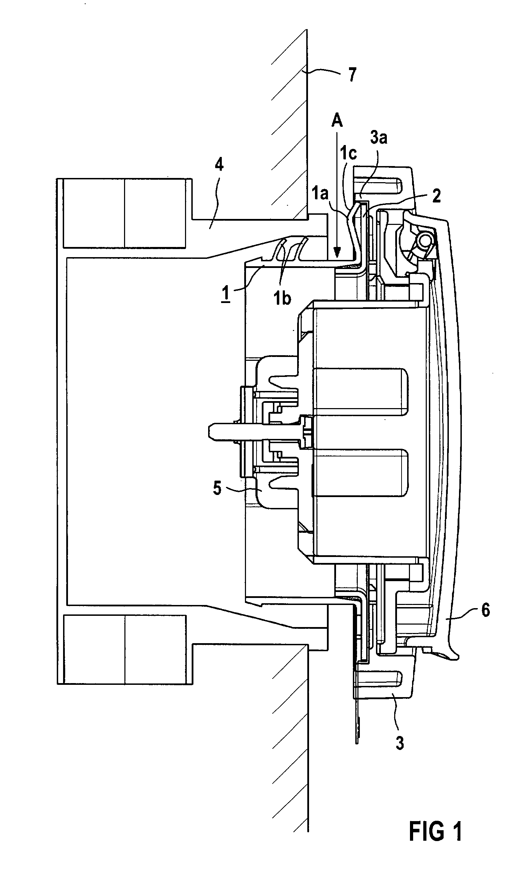

In FIG 1 ist eine Dichtvorrichtung 1 gezeigt, welche in einer Unterputzdose 4 angeordnet ist. Die Dichtvorrichtung 1 ist dabei zwischen einem Installationsgerät 5, insbesondere einem Steckdoseneinsatz, und der Unterputzdose 4 angeordnet. Das Installationsgerät 5 weist einen sogenannten Hängebügel 2 auf, welcher in einer Abdeckung oder einem Rahmen 3 rückseitig anliegt. Für einen Spritzwasserschutz weist das Installationsgerät 5 einen Klappdeckel 6 auf.

Mit dem Bezugszeichen 7 ist eine Wand bezeichnet, in der die gesamte Anordnung eingebaut sein kann.

Die Dichtvorrichtung 1 weist an ihrem rohrförmigen Grundkörper 8 endseitig eine Flanschplatte 1a auf, welche rückseitig am Hängebügel 2 anliegt. Die Flanschplatte 1a weist dabei an ihrem äußeren Rand zumindest teilweise, insbesondere in Einbaulage am oberen Rand, einen Vorsprung 1c auf. Dieser ist vorliegend durch einen Knick oder einer Abwinkelung in der Flanschplatte erzielt. Der Vorsprung 1c bildet dabei eine dichtende Wirkung zur Rückseite des Installationsgerätes 5, insbesondere zum Hängebügel 2 und/oder zum Rahmen 3.

Innerhalb der Unterputzdose 4 weist die Dichtvorrichtung 1 eine Dichtlippe, insbesondere ein Dichtlippenpaar 1b auf, das ebenfalls zumindest im oberen Bereich eine dichtende Wirkung gegenüber der Unterputzdose bildet.

Auf diese Weise ist quasi ein Dachrinneneffekt erzielt, so dass an der Wand 7 abfließendes Wasser zunächst hinter den Rahmen 3 geführt wird und dann zwischen den Dichtlippen 1b und dem Flansch 1a um das Installationsgerät 5 herum. Der Einbau des Installationsgerätes 5 ist also demnach unabhängig von einer zur Wand abschließenden Einbaulage. Somit ist ein Spritzwasserschutz auch bei ungünstigen Montagebedingungen, z.B. bei der sogenannten "abgesetzten Steinwand" erzielt.

Besonders günstig ist es dabei, wenn der Rahmen 3 wie in der Figur gezeigt, die Endkante der Flanschplatte 1a überragt. Somit kann Spritzwasser vom Rahmen 3 zur Flanschplatte 1a in Pfeilrichtung A heruntertropfen, ohne zum Hängebügel 2 zu gelangen.

Die Dichtlippe, insbesondere das Dichtlippenpaar 1b, sind derart ausgeführt, dass sie auch Verwendung von unterschiedlichen Unterputzdosen immer eine optimale Wirkung erzielen. Der Abstand zwischen Flanschplatte 1a und der ihr zugeordneten Dichtlippe 1b beträgt zumindest ca. 0,5 cm. Auf diese Weise ein wirksamer Dachrinneneffekt erzielt. Bevorzugt ist die Dichtvorrichtung 1 aus einem elastischen Kunststoff, insbesondere einem silikon- oder gummiartigen Kunststoff, gefertigt. Somit ist eine gute Dichtwirkung zu den anliegenden Teilen gewährleistet.

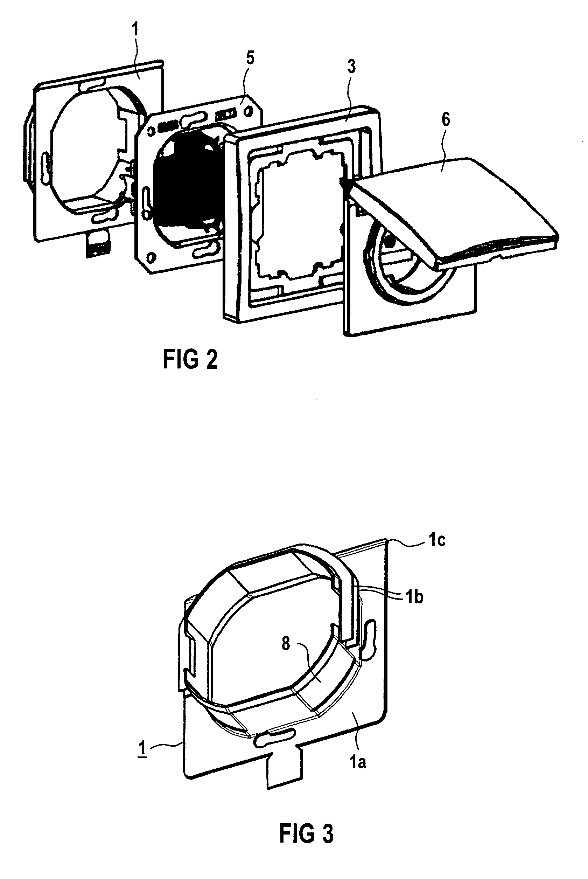

In der FIG 2 ist die Anordnung ohne Unterputzdose explosionsartig räumlich für den Zusammenbau anhand einer Steckdose gezeigt.

FIG 3 zeigt die Dichtvorrichtung 1 in einer räumlichen Darstellung von einer Rückansicht.

Dabei ist zu sehen, dass die Dichtlippe 1b den rohrförmigen Grundkörper 8 der Dichtvorrichtung 1 etwa an ihrem halben Umkreis, insbesondere an den Seiten und an der oberen Seite, umschließt. Bevorzugt weist die Dichtlippe 1b oder ein Dichtlippenpaar eine radikale Dichtlippenlänge von etwa 3 bis 10 mm auf. Je nach Materialstärke kann die Dichtlippe eine Stärke von ca. 0,2 mm bis 0,8 mm betragen. Die Länge des Grundkörpers kann etwa eine Tiefe von 10 mm bis 50 mm aufweisen. Bevorzugt liegt diese im Bereich von 10 mm bis 20 mm. Die Form des Flansches oder der Flanschplatte 1a entspricht im wesentlichen der Form eines üblichen Hängebügels und kann beispielsweise quadratisch oder auch achteckig oder rund ausgeführt sein.

## Patentansprüche

1. Dichtvorrichtung für ein Installationsgerät, welches in einer Unterputzdose anordbar ist, mit
einem rohrförmigen Grundkörper, welcher eine Flanschplatte aufweist und das Installationsgerät umfassend in der Unterputzdose anordbar ist,
wobei der Grundkörper zumindest teilweise an seinem Umfang eine zur Abdichtung gegenüber der Unterputzdose dienende Dichtlippe aufweist,
wobei die Dichtlippe und der Flansch voneinander beabstandet sind, und
wobei die Flanschplatte randseitig zumindest teilweise auf ihrer der Dichtlippe abgewandten Seite einen dichtenden Vorsprung zur randseitigen Anlage an den Hängebügel des Installationsgerätes aufweist.

2. Dichtvorrichtung nach Anspruch 1, wobei der Vorsprung von einer Abwinkelung der Flanschplatte gebildet ist.

3. Dichtvorrichtung nach Anspruch 1 oder 2, wobei die Dichtlippe ein Lippenpaar aufweist.

4. Dichtvorrichtung nach einem der Ansprüche 1 bis 3, wobei die Dichtlippe etwa den halben Umfang des rohrförmigen Grundkörpers umfasst.

5. Dichtvorrichtung nach einem der Ansprüche 1 bis 4, wobei als Werkstoff ein flexibler Kunststoff dient.

6. Dichtvorrichtung nach einem der vorhergehenden Ansprüche, wobei Flanschplatte und Dichtlippe zumindest 0,5 cm voneinander beabstandet sind.

7. Anordnung mit einer Dichtvorrichtung, einer Unterputzdose und einem darin anordbaren Installationsgerät, wobei die Dichtvorrichtung umfasst
einen rohrförmigen Grundkörper, welcher eine Flanschplatte aufweist und das Installationsgerät umfassend in der Unterputzdose anordbar ist,
wobei der Grundkörper zumindest teilweise an seinem Umfang eine zur Abdichtung gegenüber der Unterputzdose dienende Dichtlippe aufweist,
wobei die Dichtlippe und der Flansch voneinander beabstandet sind, und
wobei die Flanschplatte randseitig zumindest teilweise auf ihrer der Dichtlippe abgewandten Seite einen dichtenden Vorsprung zur randseitigen Anlage an den Hängebügel und/oder den Rahmen des Installationsgerätes aufweist.
